(19) Europäisches Patentamt

European Patent Office

Office européen des brevets

(11) Veröffentlichungsnummer: **0 334 028 B1**

(12) **EUROPÄISCHE PATENTSCHRIFT**

(45) Veröffentlichungstag der Patentschrift: **28.10.92**

(21) Anmeldenummer: **89102949.8**

(22) Anmeldetag: **21.02.89**

(51) Int. Cl.⁵: **E05F 15/00**, F16P 3/12

(54) **Verfahren zum Betreiben eines Einklemmschutz-Sensors.**

(30) Priorität: **24.03.88 DE 3809960**

(43) Veröffentlichungstag der Anmeldung:
**27.09.89 Patentblatt 89/39**

(45) Bekanntmachung des Hinweises auf die
Patenterteilung:
**28.10.92 Patentblatt 92/44**

(84) Benannte Vertragsstaaten:
**DE ES FR GB IT SE**

(56) Entgegenhaltungen:
**DE-A- 3 325 311**
**FR-A- 2 564 971**
**US-A- 3 710 050**

**PATENT ABSTRACTS OF JAPAN, Band 6, Nr.
104 (P-122)[982], 15. Juni 1982**

(73) Patentinhaber: **ROBERT BOSCH GMBH
Postfach 30 02 20
W-7000 Stuttgart 30(DE)**

(72) Erfinder: **Peter, Cornelius Dipl.-Ing.
Burg-Windeck-Strasse 35
W-7583 Ottersweiher(DE)**

## Beschreibung

Die Erfindung geht aus von einem Verfahren zum Betreiben eines Sensors zum Detektieren eines Einklemmens von Gegenständen oder von Körperteilen nach der Gattung des Hauptanspruchs.

Bei elektromotorisch bewegten Teilen, beispielsweise Türen, Fenstern, Rolläden, Schiebedächern und dergleichen, besteht grundsätzlich eine Einklemmgefahr, wodurch Gegenstände beschädigt oder Personen verletzt werden können.

Im Zuge weiterer Komfort-Erhöhung, beispielsweise beim Kraftfahrzeug, soll die Position eines Schiebedachs vorwählbar sein. Das Schiebedach nimmt dann automatisch diese Position ein. Bei einer elektrischen Zentralverriegelung beispielsweise wird das Schiebedach einbezogen, wobei sich das Dach selbständig schließt, wenn ein schließvorgang eingeleitet wird. Es kann also Betriebsfälle geben, in denen sich das Teil ohne Überwachung bewegt.

Aus der FR-A 2 564 971 ist ein Einklemmschutz-Sensor gemäß dem Oberbegriff von Anspruch 1 bekannt, der im möglichen Einklemmbereich verformbar ausgebildet ist und einen leitfähigen Kunststoff enthält, dessen elektrischer Widerstand durch die Formänderung veränderbar ist. Bei einem Defekt des Sensors ist es nicht mehr ohne weiteres möglich, ein Einklemmen mit Sicherheit zu Detektieren.

Hier greift die Erfindung ein, der die Aufgabe zugrundeliegt, ein Verfahren zum Betreiben eines Einklemmschutz-Sensors anzugeben, das die Detektionssicherheit erhöht.

Die Aufgabe wird durch die im kennzeichnenden Teil des im Hauptanspruchs angegebenen Merkmale gelöst.

Vorteile der Erfindung

Das erfindungsgemäße Verfahren zum Betreiben des Sensors weist den Vorteil auf, daß die Sicherheit des Einklemmschutzes durch eine Überprüfung des Sensors erhöht wird. Es ist vorgesehen, einen der beiden Sensoranschlüsse von der Sensorsignal-Auswerteschaltung mittels eines ansteuerbaren Schalters abzutrennen und die am anderen Anschluß des Sensors liegende Spannung zu messen. Eine Fehlermeldung wird ausgelöst, wenn der gemessene Wert außerhalb vorgegebener Grenzen liegt.

Vorteilhafte Weiterbildungen und Verbesserungen des erfindungsgemäßen Verfahrens ergeben sich aus Unteransprüchen.

Besonders vorteilhaft ist es, wenn die bei der Überprüfung des Sensors im störungsfreien Betrieb meßbare Spannung auf einen Wert festgelegt ist, der von der Betriebsspannung der Auswerteschaltung abweicht. Mit dieser Maßnahme ist neben einer Überprüfung des Sensors, beispielsweise auf Nebenschlüsse, auch eine Überprüfung einer Eingangsschaltung und eines Analog-Digital-Wandlers der Auswerteschaltung möglich.

Weitere Einzelheiten und vorteilhafte Weiterbildungen des erfindungsgemäßen Verfahrens zum Betreiben des Sensors ergeben sich aus weiteren Unteransprüchen in Verbindung mit der folgenden Beschreibung.

Zeichnung

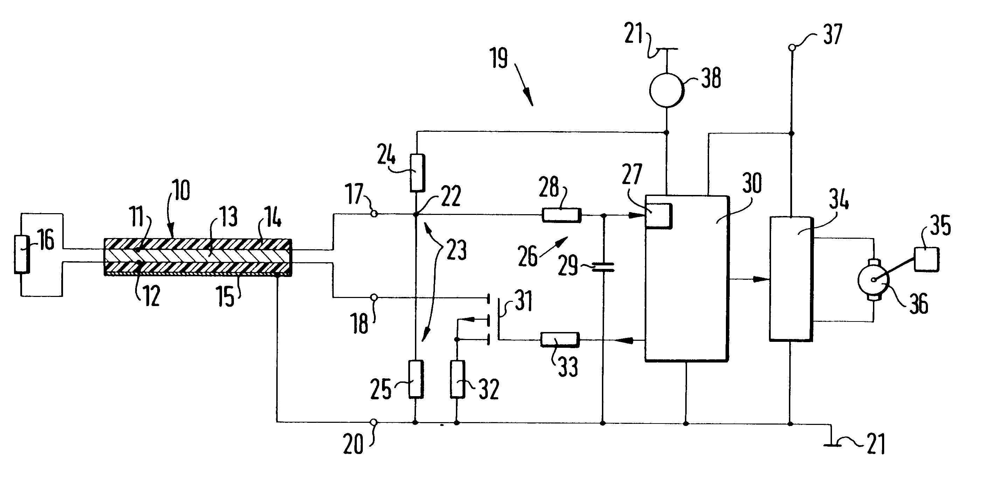

In der Figur sind ein Einklemmschutz-Sensor und ein Schaltbild einer Sensorsignal-Auswerteschaltung gezeigt.

Ein Einklemmschutz-Sensor 10 enthält einen ersten und einen zweiten Leiter 11, 12. Zwischen beiden Leitern 11, 12 befindet sich elektrisch leitfähiger Kunststoff 13, dessen elektrischer Widerstand durch Formänderungen beeinflußbar ist. Als Kunststoff 13 eignet sich beispielsweise das bei Folientastaturen verwendete elektrisch leitfähige Material. Die beiden Leiter 11, 12 und der Kunststoff 13 sind in einer Isolierhülle 14 untergebracht, die auch eine Abschirmung 15 enthalten.

Die beiden Leiter 11, 12 sind einerseits mit einem Anpaßwiderstand 16 und andererseits über einen ersten und zweiten Anschluß 17, 18 mit einer Sensorsignal-Auswerteschaltung 19 verbunden. Ein dritter Anschluß 20 verbindet die Abschirmung 15 mit Masse 21. Der erste Sensor-Anschluß 17 liegt am Mittenabgriff 22 eines Spannungsteilers 23, der die Widerstände 24 und 25 enthält. Der Mittenabgriff 22 ist ferner über einen Tiefpaß 26 mit einer Spannungsmeßeinrichtung 27 verbunden. Der Tiefpaß 26 ist beispielsweise als RC-Tiefpaß 28, 29 realisiert. Die Spannungsmeßeinrichtung 27 ist im Ausführungsbeispiel als Analog-Digital-Wandler ausgebildet, die Bestandteil einer Mikroprozessor-Schaltung 30 sein kann.

Der Mikroprozessor 30 ist mit einem steuerbaren Schalter 31 verbunden, über den der zweite Anschluß 18 des Sensors 10 mit Masse 21 verbindbar ist. Zwischen dem steuerbaren Schalter 31 und Masse 21 ist ein Schutzwiderstand 32 vorgesehen. Zwischen dem Schalter 31 und dem Mikroprozessor 30 ist ein Strombegrenzungswiderstand 33 angeordnet.

Der Mikroprozessor 30 gibt ferner Ausgangssignale an eine Motortreiberschaltung 34 ab, an die ein ein zu bewegendes Teil 35 antreibender Elektromotor 36 angeschlossen ist. Der Mikroprozessor 30 und die Treiberschaltung 34 sind an einer Versorgungsspannung angeschlossen, die zwischen Anschluß 37 und Masse 21 zur Verfügung steht. Die Spannungsmeßeinrichtung 27 und die Spannungsteiler 23 sind an eine Referenzspannungsquelle 38 angeschlossen, die im Ausführungsbeispiel gegen Masse 21 geschaltet ist.

Der Aufbau und die Wirkungsweise des Sensors 10 sowie das erfindungsgemäße Verfahren zum Betreiben des Sensors 10 werden anhand der in der Figur gezeigten Anordnung näher erläutert:

Der Einklemmschutz-Sensor 10 wird entlang einer Schließkante zwischen einem feststehenden und dem bewegten Teil 35 verlegt. Der Sensor 10 enthält einen elektrisch leitfähigen Kunststoff 13, dessen elektrischer Widerstand durch Formänderungen beeinflußbar ist. Der Kunststoff 13 wird beim Zusammenpressen niederohmig. Mit der Widerstandsänderung wird das Einklemmen eines Gegenstands oder eines Körperteils zwischen dem beweglichen Teil 35 und dem Sensor 10 bzw. dem feststehenden Teil detektiert.

Die Widerstandsänderung wird in der Sensorsignal-Auswerteschaltung 19 detektiert. Der Sensor 10 ist als Teil einer Spannungsteilerschaltung verschaltet, die den Spannungsteiler 23 sowie einen parallel zum Widerstand 25 zur Masse 21 führenden Strompfad enthält, der vom Sensor 10, dem ansteuerbaren Schalter 31 und dem Schutzwiderstand 32 gebildet wird.

Nach der Inbetriebnahme wird der ansteuerbare Schalter 31 vom Mikroprozessor 30 über den Strombegrenzungwiderstand 33 eingeschaltet, so daß vom Mittenabgriff 22 des Spannungsteilers 23 über den Sensor 10, den Schalter 31 und den Schutzwiderstand 32 ein Strom fließt, der vom Widerstand dieser Bauelemente abhängt. Der Anpaßwiderstand 16 wird zum Einstellen eines Arbeitspunkts verwendet. Ausgewertet wird die am Mittenabgriff 22 des Spannungsteilers 23 anliegende Spannung, die über den Tiefpaß 26 dem Analog-Digital-Wandler 27 zugeführt wird. Der Tiefpaß 26 beseitigt hochfrequente Störsignale, die dem Sensorausgangssignal überlagert sind.

Die vom Analog-Digital-Wandler 27 ermittelte Spannung wird im Mikroprozessor 30 in unterschiedlichen Betriebszuständen jeweils mit vorgegebenen Werten verglichen.

Die Betriebszustände und die drei unterschiedlichen Wertebereiche sind folgendermaßen festgelegt:
Das Teilungsverhältnis des Spannungsteilers 23 ist auf die Weise festgelegt, daß am Mittenabgriff 22 des unbelasteten Spannungsteilers 23 eine Spannung meßbar ist, die etwas unterhalb der von der Referenzspannungsquelle 38 bereitgestellten Spannung liegt. Diese Maßnahme bringt den Vorteil mit sich, daß die Eingangsbeschaltung sowie der Analog-Digital-wandler 27 auf ordnungsgemäßes Arbeiten überprüfbar sind. Wäre dieser Wert beispielsweise auf die Referenzspannung festgelegt, so könnte ein Kurzschluß des Analog-Digital-Wandlers 27 gegen die Referenzspannung nicht ermittelt werden. In einem ersten Schritt einer Überprüfung des Sensors 10 ist der ansteuerbare Schalter 31 gesperrt. Dieser erste Schritt wird beispielsweise bei jedem neuen Inbetriebnehmen oder in regelmäßigen oder unregelmäßigen Zeitabständen durchgeführt. Die dann vom Analog-Digital-Wandler 27 erfaßte Spannung muß der bekannten Spannung am Mittenabgriff 22 des unbelasteten Spannungsteilers 23 entsprechen oder wenigstens innerhalb eines vorgegebenen Bereichs liegen. Ein zu hoher oder ein zu niedriger Wert läßt auf Nebenschlüsse im Sensor 10 schließen. Im Fehlerfall erfolgt eine Fehlermeldung. Gleichzeitig kann ein Öffnungsvorgang ausgelöst werden.

In einem zweiten Schritt wird der ansteuerbare Schalter 31 vom Mikroprozessor 30 eingeschaltet. Der ansteuerbare Schalter 31 wird als Halbleiterschalter, insbesondere als Transistor oder als MOS-Feldeffekttransistor realisiert. Nach dem Einschalten des Sensors 10 muß die Spannung am Mittenabgriff 22 innerhalb eines ersten oder eines zweiten Bereichs liegen. Der erste Bereich entspricht dem fehlerfreien Sensorbetrieb, wobei keine Druckbelastung des Sensors 10 auftritt. Die Spannung am Mittenabgriff 22 entspricht der bekannten Spannung des mit dem Sensor 10, dem Schalter 31 und dem Schutzwiderstand 32 belasteten Spannungsteilers 23. Dieser bekannte Wert kann in einem Toleranzfeld liegen, dessen Breite eine mögliche Langzeitdrift des leitfähigen Kunststoffs 13 berücksichtigt.

Der zweite Bereich entspricht dem fehlerfreien Arbeitsbereich des Sensors 10 bei einer Druckbelastung. Der minimale Widerstand des leitfähigen Kunststoffs 13 tritt dann auf, wenn der Sensor 10 über seine gesamte Ausdehnung maximal gedrückt wird. Ein gemessener Spannungswert, der innerhalb dieses bekannten Bereichs liegt, führt zum Auslösen eines Öffnungsvorgangs. Liegt der gemessene Spannungswert bei geschlossenem Schalter 31 außerhalb der beiden Bereiche, so erfolgt eine Fehlermeldung und gegebenenfalls wird gleichzeitig ein Öffnungsvorgang ausgelöst.

Die Treiberschaltung 34 weist vorzugsweise weitere Eingänge auf, die beispielsweise zu einem Steuergerät für das zu bewegende Teil 35 führen.

**Patentansprüche**

1. Verfahren zum Betreiben eines Sensors (10) zum Detektieren eines Einklemmens von Gegenständen oder von Körperteilen bei elektromotorisch antreibbaren Türen, Fenstern, Rolläden, Schiebedächern und dergleichen, wobei der Sensor (10) im möglichen Einklemmbereich verformbar ausgebildet ist und einen leitfähigen Kunststoff (13) enthält, dessen elektrischer Widerstand durch die Formänderung veränderbar ist, dadurch gekennzeichnet, daß zur Überprüfung des Sensors (10) einer der beiden Sensoranschlüsse (17) von einer Sensorsignal-Auswerteschaltung (19) mittels eines ansteuerbaren Schalters (31) abgetrennt und die am anderen Anschluß (18) des Sensors (10) liegende Spannung gemessen wird und daß eine Fehlermeldung ausgelöst wird, wenn die Spannung außerhalb eines vorgebbaren Bereiches liegt.

2. Verfahren nach Anspruch 1, dadurch gekennzeichnet, daß die Spannung auf einen Wert festgelegt ist, der von einer Referenzspannung für die Spannungsmessung abweicht.

3. Verfahren nach Anspruch 1 oder 2, dadurch gekennzeichnet, daß der Sensor (10) als Teil eines Spannungsteilers (23) geschaltet und die Spannung an einem Anschluß (17) des Sensors (10) gemessen wird und daß die Fehlermeldung ausgelöst wird, wenn der gemessene Wert außerhalb vorgebbarer Grenzwerte liegt.

4. Verfahren nach einem der vorhergehenden Ansprüche, dadurch gekennzeichnet, daß durch ein Sensorsignal ein Öffnungsvorgang des bewegbaren Teils (35) ausgelöst wird.

## Claims

1. Method for operating a sensor (10) for detecting entrapment of items or of body parts in doors, windows, roller shutters, sliding roofs and the like which can be driven by electric motors, the sensor (10) being constructed such that it can deform in the possible entrapment region and containing a conductive plastic (13) whose electrical resistance can be changed by the change in shape, characterised in that, in order to check the sensor (10), one of the two sensor connections (17) is isolated from a sensor signal evaluation circuit (19) by means of a controllable switch (31), and the voltage on the other connection (18) of the sensor (10) is measured, and in that a defect report is triggered if the voltage is outside a range which can be predetermined.

2. Method according to Claim 1, characterised in that, for the voltage measurement, the voltage is fixed at a value which deviates from a reference voltage.

3. Method according to Claim 1 or 2, characterised in that the sensor (10) is connected as part of a voltage divider (23), and the voltage on one connection (17) of the sensor (10) is measured, and in that the defect report is triggered if the measured value is outside limiting values which can be predetermined.

4. Method according to one of the preceding claims, characterised in that an opening process of the movable part (35) is triggered by a sensor signal.

## Revendications

1. Procédé de mise en oeuvre d'un capteur (10) pour détecter le pincement d'objets ou de parties du corps humain dans le cas de portes, fenêtres, volets roulants, toits ouvrants ou moyens analogues, entraînés par des moteurs électriques, le capteur (10) étant conçu déformable dans la zone de pincement éventuel, et comprenant une matière synthétique (13) conductrice dont la résistance électrique peut être modifiée par la variation de forme, procédé caractérisé en ce que pour contrôler le capteur (10), on coupe l'une de ces deux bornes de capteur (17) par rapport au circuit d'exploitation (19) du signal de capteur à l'aide d'un interrupteur commandé (31) et on mesure la tension de l'autre borne (18) du capteur (10) et on déclenche un signal de défaut si la tension se situe en dehors d'une plage prédéterminée.

2. Procédé selon la revendication 1, caractérisé en ce qu'on fixe la tension à une valeur différente de la tension de référence pour la mesure de la tension.

3. Procédé selon la revendication 1 ou 2, caractérisé en ce que le capteur (10) fait partie d'un diviseur de tension (23) et on mesure la tension sur une borne (17) du capteur (10) et on déclenche un signal de défaut si la valeur mesurée se situe en dehors des valeurs limites prédéterminées.

4. Procédé selon l'une des revendications précédentes, caractérisé en ce qu'un signal de capteur déclenche une opération d'ouverture de la partie mobile (35).